# EUROPÄISCHE PATENTSCHRIFT

(11) **EP 2 327 917 B1**
(45) Veröffentlichungstag und Bekanntmachung des Hinweises auf die Patenterteilung: **11.11.2015**
(21) Anmeldenummer: 10191997.5
(22) Anmeldetag: 22.11.2010
(51) Int. Cl.: F16L 33/22, F16L 37/092, F16L 37/38, B60T 17/04

(54) **Anschlussvorrichtung zur Ankopplung eines Schlauchabschnitts an einen Leitungsabschnitt**
Connecting device for coupling a section of hose to a conduit section
Dispositif de raccordement pour le couplage d'une section de tuyau flexible sur une section de conduite

(30) Priorität: 25.11.2009 DE 102009055819
(43) Veröffentlichungstag der Anmeldung: 01.06.2011
(73) Patentinhaber: KNORR-BREMSE Systeme für Nutzfahrzeuge GmbH, 80809 München (DE)
(72) Erfinder: Muser, Michael, 85276, Pfaffenhofen (DE)
(74) Vertreter: Schönmann, Kurt

(56) Entgegenhaltungen:
- EP-A1- 0 711 946
- DE-C- 587 085
- FR-A1- 2 604 237
- GB-A- 1 154 398

## Beschreibung

Die Erfindung betrifft eine Anschlussvorrichtung zur Ankopplung eines Schlauchabschnitts an einen Leitungsabschnitt zur Bereitstellung eines Durchflusses eines Mediums von dem Schlauchabschnitts in den Leitungsabschnitt.

Aus dem allgemeinen Stand der Technik sind derartige Anschlussvorrichtungen bekannt. Z.B. offenbart die DE 101 62 657 A1 ein Anschlussstück für Fluidleitungen, das zur Einpressmontage in einer Gehäuseausnehmung ausgebildet ist und das einen in die Gehäuseausnehmung einsetzbaren Einsatz aufweist, der ausgebildet ist, um durch Einpressmaßnahmen in der Gehäuseausnehmung fixiert zu werden. Dazu weist der Einsatz zumindest einen hülsenartigen Einsatzkörper sowie an diesem festgelegte, zum Festhalten der anzuschließenden Fluidleitung dienende Haltemittel auf. Zum Fixieren des in die Gehäuseausnehmung eingesetzten Einsatzes ist wenigstens ein separater Befestigungsring vorhanden, der entgegengesetzt zur Einsetzrichtung orientierten Abstützfläche des Einsatzes vorgelagert und zum Einpressen in die Gehäuseausnehmung ausgebildet ist.

GB 1,154,398 beschreibt eine Anschlussvorrichtung für Rohr- oder Schlauchleitungen, insbesondere zum Anschluss an eine Rakete, mit zwei Strömungskanälen. Die Anschlussvorrichtung weist ein Verbindungsstück auf, das einen ersten Endabschnitt mit einer Eingangsöffnung zum Einleiten eines fluiden Mediums, einen dem ersten Endabschnitt gegenüberliegenden zweiten Endabschnitt mit einer Ausgangsöffnung zum Ausleiten des fluiden Mediums und einen die Eingangsöffnung und die Ausgangsöffnung verbindenden Durchgangshohlraum in Form eines Hohldorns zum Weiterleiten des Mediums zwischen der Eingangsöffnung und der Ausgangsöffnung aufweist, wobei an dem ersten Endabschnitt des Verbindungstücks eine Aufnahmevorrichtung und an dem zweiten Endabschnitt des Verbindungstückes eine Lagerungsvorrichtung zur Kopplung des Verbindungstückes an dem Leitungsabschnittes des Gehäuseabschnitts und eine Dichtfläche ausgebildet sind.

FR 2 604 237 beschreibt ein System für eine abgedichtete Verbindung von zwei Flüssigkeitskreisläufen, insbesondere von Flüssigkeitskreisläufen eines Dialyse-Apparates. Das Gehäuse des Systems weist ein männliches Anschlussstück zum Anschluss eines Leitungsabschnittes des Dialyse-Apparates und ein weibliches Anschlussstück zum Anschluss eines Schlauchsteckers, der mit dem Blutkreislauf eines Pateinten verbindbar ist, auf. Zwischen dem männlichen Anschlussstück 5 und dem weiblichen Anschlussstück ist ein Rückschlagventil angeordnet.

EP 0711 946 A1 betrifft eine Steck-Kupplung von Leitungen, die ein Kupplungsgehäuse aufweist, an dessen Gehäuseseite zwei Ausgangsöffnungen vorgesehen sind. Jeder Ausgangsöffnung ist eine Steckerverbindungseinrichtung für eine entsprechende Leitung zugeordnet. Ferner steht jede Ausgangsöffnung über einen Durchgangskanal mit einer Eingangsöffnung in Verbindung, wobei sich in jedem Durchgangskanal eine Absperreinrichtung befindet. Jede Absperreinrichtung weist einen federbelasteten Ventilkörper auf, die jeweils in dem Gehäuse untergebracht sind.

DE 587 085 beschreibt eine Schlauchkupplung mit einem federbelasteten Rückschlagventil. Das Gehäuse der Schlauchkupplung bildet eine Buchse aus, in die ein Schlauch mit entsprechendem Stecker lösbar eingesteckt und in verschiedene Positionen verrastet werden kann. Durch korrektes Einstecken des Schlauchsteckers wird das Rückschlagventil geöffnet. Die Öffnungsweite des Rückschlagventils wird durch die entsprechende Rastposition des Steckers in der Buchse bestimmt.

Aufgabe der Erfindung ist, eine Anschlussvorrichtung mit einem Ventilkörper und mit einem Verbindungsstück zur Ankopplung eines Schlauchabschnitts an einen Leitungsabschnitt zur Bereitstellung eines Durchflusses eines Mediums bereitzustellen, die möglichst einfach gebaut ist und die die Verwendung unterschiedlicher Bauformen des Verbindungsstücks erlaubt.

Diese Aufgabe wird mit den Merkmalen des Patentanspruchs 1 gelöst. Weitere Ausführungsformen sind in den auf diesen rückbezogenen Unteransprüchen angegeben.

Die Erfindung lehrt eine Anschlussvorrichtung zur Ankopplung eines Schlauchabschnitts an einen Leitungsabschnitt zur Bereitstellung eines Durchflusses eines Mediums von dem Schlauchabschnitts in den Leitungsabschnitt, wobei die Anschlussvorrichtung ein Gehäuseteil mit einem Leitungsabschnitt, an das der Schlauch ankoppelbar ist, ein Verbindungsstück mit einer Aufnahmevorrichtung zur Befestigung des Schlauchabschnitts und mit einer Lagerungsvorrichtung zur Verbindung des Verbindungsstück mit dem Gehäuseteil, eine mit dem Gehäuseteil zusammenwirkende Ventilvorrichtung mit einem zwischen einer offenen und einer geschlossenen Stellung bewegbaren Ventilkörper zum Öffnen oder Abdichten des Durchflusses eines Mediums zwischen dem Schlauchabschnitts und dem Gehäuseteil, wobei das Gehäuseteil eine Führungsvorrichtung aufweist, mit der der Ventilkörper in dem Gehäuseteil geführt wird, aufweisen kann. Weiterhin kann das Verbindungsstück eine Dichtungsvorrichtung mit einer dem Ventilkörper zugewandten Dichtfläche aufweisen, und/oder der Ventilkörper eine dem Verbindungsstück zugewandte Dichtfläche aufweisen, wobei die Dichtflächen derart angeordnet sind, dass diese bei der geschlossenen Stellung des Ventilkörpers in dichtender Weise aneinander anliegen.

Weiterhin kann die Anschlussvorrichtung dadurch gekennzeichnet sein, dass das Verbindungsstück ein Gewinde aufweist, mit dem es in das Gehäuse verschraubbar ist.

Weiterhin kann die Anschlussvorrichtung dadurch gekennzeichnet sein, dass das Verbindungsstück über einen Bajonett-Verschluss mit dem Gehäuse verbindbar ist.

Weiterhin kann die Anschlussvorrichtung dadurch gekennzeichnet sein, dass das Verbindungsstück über eine Steckverbindung mit dem Gehäuse verbindbar ist.

Weiterhin kann die Dichtungsvorrichtung als eine flache Dichtungsvorrichtung ausgebildet sein, wobei die Dichtfläche des Verbindungsstücks und die Dichtfläche des Ventilkörpers einen Winkel zu einer Strömungsrichtung des Fluids, in der das Fluid von dem Schlauchabschnitt in das Gehäuse strömt, einnimmt, und der Winkel in einem Bereich von 85° bis 95°, bevorzugt von 88° bis 92° liegt.

Weiterhin kann die Dichtungsvorrichtung als eine konische Dichtungsvorrichtung ausgebildet sein, wobei die Dichtfläche des Verbindungsstücks und die Dichtfläche des Ventilkörpers einen Winkel zu einer Strömungsrichtung des Fluids, in der das Fluid von dem Schlauchabschnitt in das Gehäuse strömt, einnimmt, und der Winkel in einem Bereich von 5° bis 80°, bevorzugt von 30° bis 45° liegt.

Weiterhin kann die Ventilvorrichtung ein Rückschlagventil oder ein Doppelrückschlag-Ventil sein.

Die Erfindung lehrt in einem weiteren Aspekt ein Bremssystem, für ein Kraftfahrzeug, wobei insbesondere eine hydraulische Flüssigkeit oder ein pneumatisches Gas als Fluid zur Übertragung der Bremskraft von einem Bediener zu mindestens einer fahrzeugseitigen Bremsvorrichtung verwendet wird, dadurch gekennzeichnet, dass eine Anschlussvorrichtung der oben genannten Art zur Verbindung der Schlauchabschnitte von Bremsschläuchen mit dem Gehäuse, insbesondere von Bremsleitungen, vorgesehen ist.

Durch die erfindungsgemäße Lösung wird eine Anschlussvorrichtung zur Ankopplung eines Schlauchabschnitts an einen Leitungsabschnitt geschaffen, mit der die Funktionalität des Verbindungsstücks, nach der der Schlauchabschnitt an das Gehäuseteil gekoppelt wird, mit der Funktionalität des im Gehäuseteil vorgesehenen Ventils integriert wird. Auf diese Weise wird bei der erfindungsgemäßen Lösung die Zahl der Teile gegenüber aus dem Stand der Technik bekannten Lösungen reduziert. Weiterhin werden durch die Reduktion der Anzahl der Teile auch der Fertigungsaufwand und die Fertigungszeit dann verringert. Darüber hinaus wird durch den konstruktiven Aufbau der Erfindung eine leichte und robuste Anschlussvorrichtung bereitgestellt, die ferner auch den Vorteil bietet, dass einfache Ventile zum Einsatz kommen können, so dass auch der Fertigungsprozess dieser Ventile vereinfacht werden kann.

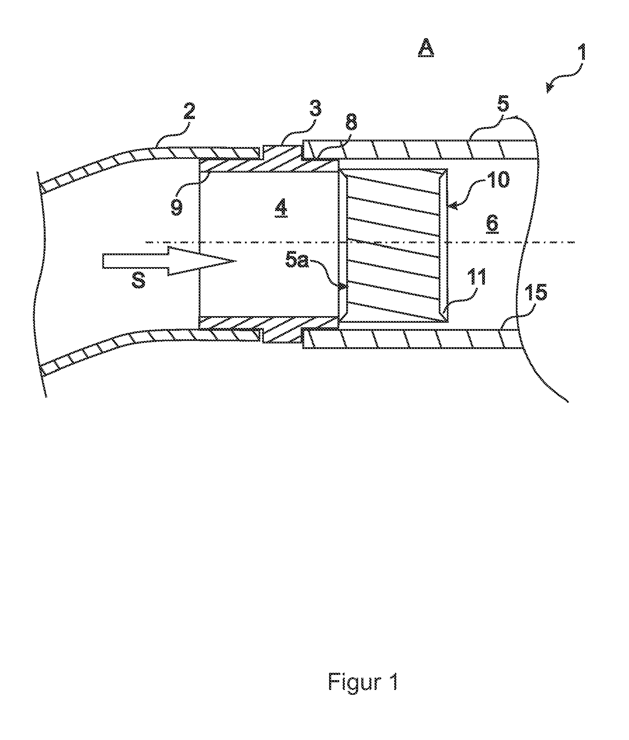

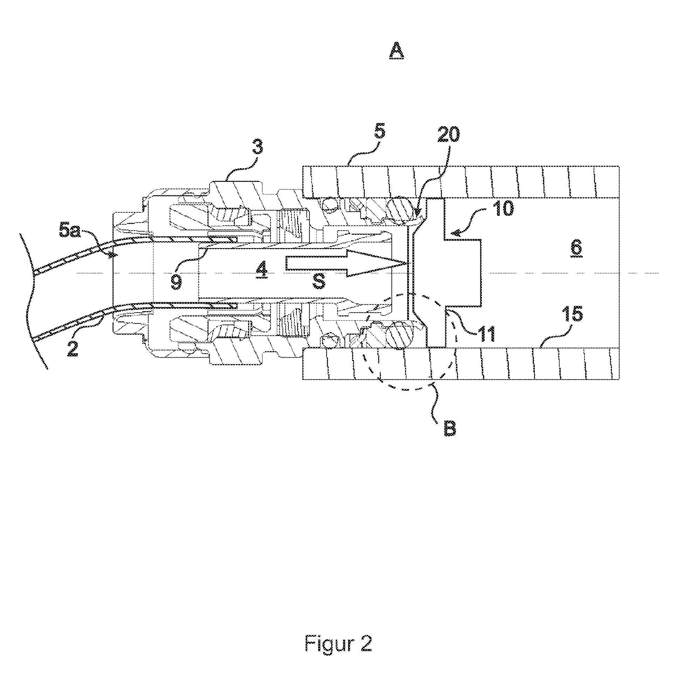

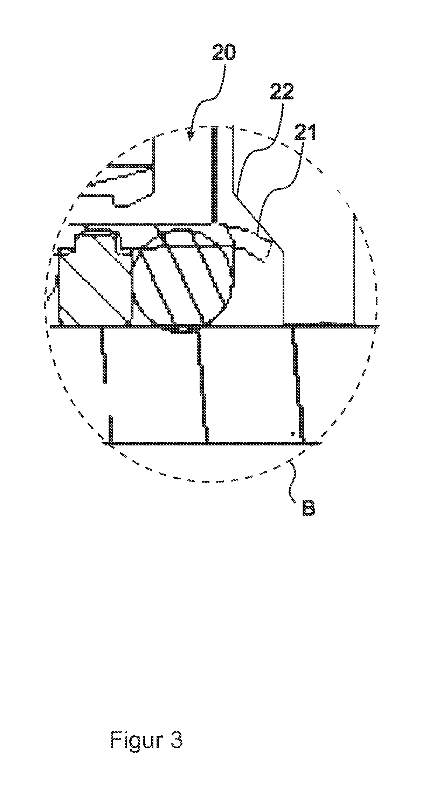

Im Folgenden werden Ausführungsbeispiele der Erfindung an Hand der beigefügten Figuren beschrieben, die zeigen:
▪ Figur 1 eine schematische Schnittdarstellung eines ersten Ausführungsbeispiels der erfindungsgemäßen Anschlussvorrichtung zur Ankopplung eines Schlauchabschnitts, von der ein Verbindungsstück, ein Gehäuseteil und ein Ventilkörper dargestellt ist,
▪ Figur 2 eine schematische Schnittdarstellung eines zweiten Ausführungsbeispiels der erfindungsgemäßen Anschlussvorrichtung zur Ankopplung eines Schlauchabschnitts, von der ebenfalls ein Verbindungsstück, ein Gehäuseteil und ein Ventilkörper dargestellt ist.
▪ Figur 3 eine Detailansicht der schematischen Schnittdarstellung aus Figur 2

Die Figur 1 zeigt ein Gehäuseteil 5, das Teil eines Leitungsabschnitts ist, das zur Leitung eines Mediums, also eines Gases oder von Flüssigkeit, vorgesehen ist. Bestimmungsgemäß ist vorgesehen, dass das Medium durch einen Eingang 5a in das Innere 6 des Gehäuseteils 5, oder in eine von dem Gehäuseteil 5 umgrenzten Hohlraum eingeführt wird. Das Medium gelangt über einen Schlauchabschnitt 2, der mittels eines Verbindungsstücks 3 an dem Leitungsabschnitt oder dem Gehäuseteil 5 angekoppelt ist, in das Innere 6 des Gehäuseteils 5, um von dort zu Verbrauchern zu gelangen, die von dem Eingang 5a aus gesehen in Richtung zum Inneren des Gehäuseteils 5, d.h. in einer Strömungsrichtung S gelegen sind, die von dem Schlauchabschnitt 2 aus zum Gehäuseteil 5 führt.

Das Verbindungsstück 3 weist ein Inneres 4 oder einen Hohlraum sowie eine Aufnahmevorrichtung 9 zur Ankopplung des Schlauchabschnitts 2 auf, der an der dem Gehäuseteil 5 abgewandten Seite desselben gelegen ist. Die Aufnahmevorrichtung 9 dient zur Befestigung eines Endes des Schlauchabschnitts 2. Zu diesem Zweck kann die Aufnahmevorrichtung 9 insbesondere eine Klemmvorrichtung aufweisen, mit der der umlaufende Randbereich des Schlauchabschnitts gehalten werden kann. Dabei ist die Aufnahmevorrichtung 9 derart ausgeführt, dass diese den Schlauchabschnitt 2 dichtend in dem Verbindungsstück 3 aufnimmt, so dass das Innere des Schlauchs zusammen mit dem Inneren 4 des Verbindungsstücks 3 gegenüber der Umgebung A abgedichtet ist.

Das Verbindungsstück 3 weist weiterhin eine Lagerungsvorrichtung 8 auf, mit der das Verbindungsstück 3 an das Gehäuseteil 5 gekoppelt werden kann. Dabei ist das Verbindungsstück 3 fest mit dem Gehäuseteil 5 verbunden, wobei das Verbindungsstück 3 in seiner axialen Richtung und rotatorisch bis zu einer Mindestkraft bzw. Mindestmoment im oder am Gehäuseteil 5 fixiert ist. Die Verbindung ist dabei weiterhin derart gestaltet, so dass die Kombination aus dem Gehäuseteil 5 und dem mit diesem verbundenen Verbindungsstück 3 das Innere 6 des Gehäuseteils 5 sowie das Innere 4 des Verbindungsstücks 3 gegenüber der Umgebung A abdichtet. Hierzu können zwischen dem Verbindungsstück 3 und dem Gehäuseteil 5 Dichtungen angeordnet sein. Das Verbindungsstück 3 kann dabei im Bereich der Lagervorrichtung 8 mit einem Außengewinde und das Gehäuseteil 5 mit einem Innengewinde versehen sein, so dass das Verbindungsstück 3 in das Gehäuseteil 5 verschraubt werden kann.

In einer weitern, nicht dargestellten Ausführungsform der Erfindung kann das Verbindungsstück 3 eine Steckverbindung aufweisen, zum Verbinden des Verbindungsstück 3 mit dem Gehäuseteil 5. Alternativ hierzu kann das Verbindungsteil 3 mit dem Gehäuse 5 über eine Bajonett-Verbindung verbunden werden.

Erfindungsgemäß ist weiterhin eine mit dem Gehäuseteil 5 zusammenwirkende Ventilvorrichtung 10 vorgesehen. Die Ventilvorrichtung 10 weist allgemein einen zwischen einer offenen und einer geschlossenen Stellung bewegbaren Ventilkörper 11 zum Öffnen oder Abdichten des Durchflusses des Mediums von dem Schlauchabschnitt 2 zu dem Gehäuseteil 5 und umgekehrt auf. Zur Führung des Ventilkörpers 11 bei seiner Bewegung zwischen der offenen und der geschlossenen Stellung weist das Gehäuseteil 5 eine Führungsvorrichtung 15 auf. Die Führungsvorrichtung 15 ist insbesondere auf einer Anlagefläche gebildet, an der die Außenseite des Ventilkörpers 11 bei den vorgesehenen funktionalen Positionszuständen anliegt und insbesondere formschlüssig anliegt. In einer geschlossenen Stellung der Ventilvorrichtung 10 steht der Ventilkörper 11 mit dem Verbindungsstück 3 in Kontakt, so dass Fluid aus dem Inneren 4 des Verbindungsstück 3 nicht in das Innere 6 des Gehäuseteils 5 strömen kann.

Eine weitere Ausführungsform der vorliegenden Erfindung ist in Figur 2 dargestellt. Der Ventilkörper 11 ist in seinem verschiedenen Funktionspositionen auf der zu dem Schlauchabschnitt 2 abgewandten Seite des Verbindungsstücks 3 gelegen. Die Anschlussvorrichtung 1 weist eine Dichtungsvorrichtung 20 auf, die aus einer ersten an dem Verbindungsstück 3 ausgebildeten Dichtfläche 21 und einer zweiten an dem Ventilkörper 11 ausgebildeten Dichtfläche 22 gebildet ist. Eine Detailansicht der Dichtungsvorrichtung 20 ist in Figur 3 dargestellt. Die Dichtflächen 21, 22 sind derart ausgebildet und derart angeordnet, dass diese bei der geschlossenen Stellung des Ventilkörpers 11 entlang ihrer Umfangsrichtung in dichtender Weise aneinander anliegen, so dass in dieser Stellung des Ventilkörpers 11 ein Durchfluss von dem Schlauchabschnitt zu dem Inneren 6 des Gehäuseteils und umgekehrt verhindert wird.

Die Dichtflächen 21, 22 können so ausgebildet sein, dass sie einen Winkel von 90° zur Strömungsrichtung S einnehmen. In diesem Fall ist die Dichtungsvorrichtung 20 als flache Dichtung ausgeführt. In einer geschlossenen Stellung liegen die Dichtflächen 21, 22 planparallel aufeinander und erzeugen so die Dichtigkeit.

Alternativ hierzu können die Dichtflächen 21, 22 auch in einem schrägen Winkel zur Strömungsrichtung S des Fluids angeordnet sein, so dass die Dichtungsvorrichtung 20 als konische Dichtung ausgeführt ist. In diesem Fall sind die Dichtflächen 21, 22 bezogen auf die Strömungsrichtung S konisch ausgerichtet und schließen mit der Strömungsrichtung einen Winkel von 35° ein. Wie bei der flachen Dichtung kommen auch hier die Dichtflächen 21, 22 planparallel zur Auflage, wenn der Ventilkörper 11 in eine geschlossenen Position überführt wird.

In beiden genannten Ausführungsformen weisen die Dichtflächen eine kreisrunde äußere Gestalt auf.

In einer weiteren, nicht dargestellten Ausführungsform der Erfindung kann eine Vorspannvorrichtung, insbesondere ein Federelement vorgesehen sein, dass mit dem Verbindungsstück 3 und dem Ventilvorrichtung 10 in Verbindung steht. Dabei erzeugt das Vorspannelement eine Vorspannkraft, durch die die Ventilvorrichtung 10 auf das Verbindungsstück 3 gepresst wird. Dadurch kann ein besonders guter Sitz der beiden Dichtflächen 21, 22 aufeinander realisiert werden und somit die Dichtigkeit weiter verbessert werden. Ein solches Vorspannelement kann auch in den oben beschriebenen Ausführungsformen der vorliegenden Erfindung vorgesehen werden.

In den beschriebenen Ausführungsformen kann der Ventilkörper 11 z.B. Teil eines Rückschlagventils oder eines Doppelrückschlag-Ventils sein.

Dabei kann das Verbindungsstück 3 insbesondere aus einem Kunststoff, aus Messing oder Aluminium oder aus einer Messing- und/oder Aluminiumlegierung gebildet sein.

Die genannten Merkmale und Ausführungsformen der Erfindung können teilweise oder als Ganzes miteinander kombiniert werden.

## Patentansprüche

1. Anschlussvorrichtung (1) zur Ankopplung eines Schlauchabschnitts (2) an einen Leitungsabschnitt (5) zur Bereitstellung eines Durchflusses eines Mediums von dem Schlauchabschnitt (2) in den Leitungsabschnitt (5), die Anschlussvorrichtung (1) aufweisend:
▪ ein Gehäuseteil (5) mit dem Leitungsabschnitt (5),
▪ ein Verbindungsstück (3) mit einer Aufnahmevorrichtung (9) an einem ersten Endabschnitt des Verbindungsstücks (3) zur Befestigung des Schlauchabschnitts (2) und mit eine Lagerungsvorrichtung (8) an einem entgegen gesetzt zu dem ersten Endabschnitt gelegenen zweiten Endabschnitt des Verbindungsstücks (3) Leitungsabschnitt (5) verbunden ist,
▪ eine Ventilvorrichtung (10) mit einem an einer Anlagefläche einer Führungsvorrichtung (15) des Gehäuseteils (5) zwischen einer offenen und einer geschlossenen Stellung bewegbaren Ventilkörper (11) zum Öffnen oder Abdichten des Durchflusses eines Mediums zwischen dem Schlauchabschnitt (2) und dem Gehäuseteil (5),
**dadurch gekennzeichnet,**
▪ **dass** der Ventilkörper (11) eine Außenseite aufweist, die an der Anlagefläche der Führungsvorrichtung (15) des Gehäuseteils (5) formschlüssig anliegt, wobei die Außenseite des Ventilkörpers (11) von dem Schlauchabschnitt (2) aus gesehen außerhalb des Verbindungsstücks (3) gelegen ist, um den Ventilkörper (11) bei dessen Bewegung zwischen einer offenen und einer geschlossenen Stellung zu führen,
▪ **dass** das Verbindungsstück (3) eine Dichtungsvorrichtung mit einer dem Ventilkörper (11) zugewandten Dichtfläche und der Ventilkörper (11) eine dem Verbindungsstück (3) zugewandte Dichtfläche aufweist, wobei sich die Dichtfläche des Verbindungsstücks (3) an einem axialen Ende des zweiten Endabschnitts des Verbindungsstücks (3) erstreckt und von dem ersten Endabschnitt des Verbindungsstücks abgewandt ist, so dass die Dichtflächen bei der geschlossenen Stellung des Ventilkörpers (11) in dichtender Weise aneinander anliegen.

2. Anschlussvorrichtung nach Anspruch 1, **dadurch gekennzeichnet, dass** das Verbindungsstück (3) ein Gewinde aufweist, mit dem es in das Gehäuse (5) verschraubbar ist.

3. Anschlussvorrichtung nach Anspruch 1, **dadurch gekennzeichnet, dass** das Verbindungsstück (3) über einen Bajonett-Verschluss mit dem Gehäuse (5) verbindbar ist.

4. Anschlussvorrichtung nach Anspruch 1, **dadurch gekennzeichnet, dass** das Verbindungsstück (3) über eine Steckverbindung mit dem Gehäuse (5) verbindbar ist.

5. Anschlussvorrichtung nach einem der Ansprüche 1 bis 4, **dadurch gekennzeichnet, dass** die Dichtungsvorrichtung (20) als eine flache Dichtungsvorrichtung ausgebildet ist, wobei die Dichtfläche (21) des Verbindungsstücks (3) und die Dichtfläche (22) des Ventilkörpers (11) einen Winkel zur Strömungsrichtung (S) des Fluids, in der das Fluid von dem Schlauchabschnitt (2) in das Gehäuse (5) strömt, einnimmt, und der Winkel in einem Bereich von 85° bis 95°, bevorzugt von 88° bis 92° liegt.

6. Anschlussvorrichtung nach einem der Ansprüche 1 bis 4, **dadurch gekennzeichnet, dass** die Dichtungsvorrichtung (20) eine als konische Dichtungsvorrichtung ausgebildet ist, wobei die Dichtfläche (21) des Verbindungsstücks (3) und die Dichtfläche (22) des Ventilkörpers (11) einen Winkel zu einer Strömungsrichtung (S) des Fluids, in der das Fluid von dem Schlauchabschnitt (2) in das Gehäuse (5) strömt, einnimmt, und der Winkel in einem Bereich von 5° bis 80°, bevorzugt von 30° bis 45° liegt.

7. Anschlussvorrichtung nach einem der Ansprüche 1 bis 6, **dadurch gekennzeichnet, dass** die Ventilvorrichtung (10) ein Rückschlagventil oder ein Doppelrückschlag-Ventil ist.

8. Bremssystem, für ein Kraftfahrzeug, wobei insbesondere eine hydraulische Flüssigkeit oder ein pneumatisches Gas als Fluid zur Übertragung der Bremskraft von einem Bediener zu mindestens einer fahrzeugseitigen Bremsvorrichtung verwendet wird,
**dadurch gekennzeichnet, dass**
eine Anschlussvorrichtung nach einem der Ansprüche 1 bis 4 zur Verbindung der Schlauchabschnitten (2) von Bremsschläuchen mit dem Gehäuseteil (5) und insbesondere mit Bremsleitungen, vorgesehen ist.

## Claims

1. Connecting device (1) for coupling a hose section (2) to a conduit section (5) for the provision of a flow of medium from the hose section (2) into the conduit section (5), the connecting device (1) comprising:
- a housing part (5) with the conduit section (5),
- a connecting piece (3) with a reception device (9) on a first end section of the connecting piece (3) for securing the hose section (2) and with a mounting device (8) on a second end section of the connecting piece (3) opposite the first end section, connected to the conduit section (5),
- a valve device (10) with a valve body (11) movable on a contact surface of a guide device (15) of the housing part (5) between an open and a closed position for opening or blocking the flow of a medium between the hose section (2) and the housing part (5),
**characterised in that**
- the valve body (11) has an outside in positive contact with the contact surface of the guide device (15) of the housing part (5), wherein the outside of the valve body (11), as viewed from the hose section (2), is situated outside the connecting piece (3) in order to guide the valve body (11) in its movement between an open and a closed position,
- the connecting piece (3) comprises a sealing device with a sealing face facing the valve body (11) and the valve body (11) comprises a sealing face facing the connecting piece (3), the sealing face of the connecting piece (3) extending at an axial end of the second end section of the connecting piece (3) and facing away from the first end section of the connecting piece, so that the sealing faces bear against one another while forming a seal in the closed position of the valve body (11).

2. Connecting device according to claim 1, **characterised in that** the connecting piece (3) has a thread with which it can be tightened into the housing (5).

3. Connecting device according to claim 1, **characterised in that** the connecting piece (3) can be connected to the housing (5) by means of a bayonet lock.

4. Connecting device according to claim 1, **characterised in that** the connecting piece (3) can be connected to the housing (5) by means of a plug-and-socket connection.

5. Connecting device according to any of claims 1 to 4, **characterised in that** the sealing device (20) is designed as a flat sealing device, the sealing face (21) of the connecting piece (3) and the sealing face (22) of the valve body (11) enclosing an angle with the direction of flow (S) in which the fluid flows from the hose section (2) into the housing (5), the angle being in a range of 85° to 95°, preferably of 88° to 92°.

6. Connecting device according to any of claims 1 to 4, **characterised in that** the sealing device (20) is designed as a conical sealing device, the sealing face (21) of the connecting piece (3) and the sealing face (22) of the valve body (11) enclosing an angle with the direction of flow (S) in which the fluid flows from the hose section (2) into the housing (5), the angle being in a range of 5° to 80°, preferably of 30° to 45°.

7. Connecting device according to any of claims 1 to 6, **characterised in that** the valve device (10) is a non-return valve or a double check valve.

8. Braking system for a motor vehicle, wherein a hydraulic fluid or a pneumatic gas in particular is used for transmitting the braking force from an operator to at least one braking device on the vehicle,
**characterised in that**
a connecting device according to any of claims 1 to 4 is provided for connecting the hose sections (2) of brake hoses to the housing part (5) and in particular to brake lines.

## Revendications

1. Dispositif de raccordement d'un tronçon (2) de conduit souple à un tronçon (5) de conduit pour ménager un passage d'un fluide du tronçon (2) de conduit souple au conduit (5) de conduit, le dispositif (1) de raccordement comprenant :
▪ une partie (5) de boîtier ayant le tronçon (5) de conduit,
▪ une pièce (3) de liaison est relié à un dispositif (9) de réception à une première partie d'extrémité de la pièce (3) de liaison pour fixer le tronçon (2) de conduit souple et à un dispositif (8) de palier à une deuxième partie d'extrémité opposée à la première partie d'extrémité de la pièce (3) de liaison pour fixer le tronçon (5) de conduit,
▪ un dispositif (10) de soupape ayant un obturateur (11) mobile sur une surface d'appui d'un dispositif (15) de guidage de la partie (5) de boîtier pour autoriser ou pour empêcher le passage d'un fluide entre le tronçon (2) de conduit souple et la partie (5) de boîtier,
**caractérisé**
▪ **en ce que** l'obturateur (11) a un côté extérieur, qui s'applique à complémentarité de forme à la surface d'appui du dispositif (15) contact de la partie (5) de boîtier, le côté extérieur de l'obturateur (11) étant, vu du tronçon (2) de conduit souple, à l'extérieur de la pièce (3) de liaison, pour guider l'obturateur (11) lors de son mouvement entre une position ouverte et une position fermée,
▪ **en ce que** la pièce (3) de liaison a un dispositif d'étanchéité ayant une surface d'étanchéité tournée vers l'obturateur (11) et l'obturateur (11) a une surface d'étanchéité tournée vers la pièce (3) de liaison, la surface d'étanchéité de la pièce (3) de liaison s'étendant à une extrémité axiale de la deuxième partie d'extrémité de la pièce (3) de liaison et étant éloignée de la première partie d'extrémité de la pièce (3) de liaison, de manière à ce que les surfaces d'étanchéité viennent l'une sur l'autre d'une façon étanche en la position fermée de l'obturateur (11).

2. Dispositif de raccordement suivant la revendication 1, **caractérisé en ce que** la pièce (3) de liaison a un filetage, par lequel elle peut être vissée dans le boîtier (5).

3. Dispositif de raccordement suivant la revendication 1, **caractérisé en ce que** la pièce (3) de liaison peut être reliée au boîtier (5) par une fermeture à baïonnette.

4. Dispositif de raccordement suivant la revendication 1, **caractérisé en ce que** la pièce (3) de liaison peut être reliée au boîtier (5) par une liaison par enfichage.

5. Dispositif de raccordement suivant l'une des revendications 1 à 4, **caractérisé en ce que** le dispositif (20) d'étanchéité est constitué sous la forme d'un dispositif d'étanchéité plat, la surface (21) d'étanchéité de la pièce (3) de liaison et la surface (22) d'étanchéité de l'obturateur (11) faisant un angle avec le sens (S) d'écoulement du fluide, dans lequel le fluide va du tronçon (2) de conduit souple au boîtier (5), et l'angle étant dans une plage de 85° à 95°, de préférence de 88° à 92°.

6. Dispositif de raccordement suivant l'une des revendications 1 à 4, **caractérisé en ce que** le dispositif (20) d'étanchéité est constitué sous la forme d'un dispositif d'étanchéité conique, la surface (21) d'étanchéité de la pièce (3) de liaison et la surface (22) d'étanchéité de l'obturateur (11) faisant un angle avec le sens (S) d'écoulement du fluide, dans lequel le fluide va du tronçon (2) de conduit souple au boîtier (5), et l'angle est dans une plage de 5° à 80°, de préférence de 30° à 45°.

7. Dispositif de raccordement suivant l'une des revendications 1 à 6, **caractérisé en ce que** le dispositif (10) de soupape est un clapet antiretour ou un clapet antiretour double.

8. Système de frein pour un véhicule automobile, dans lequel, notamment, un liquide hydraulique ou un gaz pneumatique est utilisé comme fluide de transmission de la force de freinage par un utilisateur à au moins un dispositif de frein côté véhicule,
**caractérisé en ce que**
un dispositif de raccordement suivant l'une des revendications 1 à 4 est prévu pour relier les tronçons (2) de conduit souple de frein à la partie (5) de boîtier et notamment à des conduites de frein.
